(19) Europäisches Patentamt
European Patent Office
Office européen des brevets

(11) Numéro de publication: **0 295 188**
**A1**

# (12) DEMANDE DE BREVET EUROPEEN

(21) Numéro de dépôt: **88420053.6**

(22) Date de dépôt: **18.02.88**

(51) Int. Cl.$^4$: **C 08 G 77/38**
C 08 L 27/06

(30) Priorité: **24.02.87 FR 8702618**

(43) Date de publication de la demande:
**14.12.88 Bulletin 88/50**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Gay, Michel**
**11, rue Garibaldi**
**F-69006 Lyon (FR)**

(74) Mandataire: **Seugnet, Jean Louis et al**
**RHONE-POULENC INTERSERVICES Service Brevets Chimie Centre de Recherches des Carrières B.P. 62**
**F-69192 Saint-Fons Cédex (FR)**

## (54) Diorganopolysiloxane à fonction alpha-mercaptoester utile comme stabilisant des polymères à base de chlorure de polyvinyle.

(57) La présente invention concerne un diorganopolysiloxane à fonction alpha-mercaptoester de formule :

$$R^3Si-\left[OSi(R)\left[YOCOCH(R')SH\right]\right]_p-\left[OSiR_2\right]_r-\left[OSi(R)(YOH)\right]_q-OSiR_3 \qquad (1)$$

Le diorganosiloxane selon l'invention peut être préparé par estérification directe d'au moins une partie des groupements gamma-hydroxylés du diorganopolysiloxane correspondant par un acide de formule HS-CH(R')-COOH.

Les diorganopolysiloxane de formule (1) sont en particulier utilisables comme stabilisant des polymères à base de chlorure de polyvinyle.

EP 0 295 188 A1

## Description

## DIORGANOPOLYSILOXANE A FONCTION ALPHA-MERCAPTOESTER UTILE COMME STABILISANT DES POLYMERES A BASE DE CHLORURE DE POLYVINYLE

La présente invention concerne un diorganopolysiloxane à fonction alpha-mercaptoester, son procédé de préparation et ses applications notamment comme stabilisant des polymères à base de chlorure de polyvinyle (PVC).

De nombreux diorganopolysiloxanes porteurs de divers groupements fonctionnels organiques ont déjà été décrits dans la littérature comme par exemple ceux décrits aux pages 261 à 268 de l'ouvrage de NOLL, Chemistry and Technology of Silicones, édition en langue anglaise de 1968 et dans les brevets américains US-A-4 261 875 et 4 294 974.

Par ailleurs il existe déjà de nombreux stabilisants des polymères à base de PVC parmi lesquels on peut en particulier citer les diesters des acides mercapto-2 propioniques du glycol, décrit en particulier dans le brevet français FR-A-2 552 440.

La présente invention a en particulier pour but de proposer des diorganopolysiloxanes à fonction alpha-mercaptoester peu coûteux, aisés à préparer et présentant des applications nombreuses et intéressantes notamment comme stabilisant du PVC.

Ce but est atteint par la présente invention qui concerne en effet un diorganopolysiloxane de formule :

$$R^3Si\left[OSi(R)\left[YOCOCH(R')SH\right]\right]_p\left[OSiR_2\right]_r\left[OSi(R)(YOH)\right]_q OSiR_3 \qquad (1)$$

dans laquelle :

- les symboles R identiques ou différents sont choisis parmi les radicaux alkyle linéaires ou ramifiés en $C_1$-$C_8$ inclusivement, phényle et trifluoro-3,3,3 propyle, au moins 80 %, des radicaux R étant des radicaux méthyle,
- les symboles Y, identiques ou différents représentent un chaînon choisi parmi un chaînon alkylène linéaire ou ramifié en $C_1$-$C_{18}$ inclusivement, éventuellement prolongé par un chaînon polyéther choisi parmi le polyoxyde d'éthylène, le polyoxyde de propylène et leurs mélanges,
- le symbole R′ represente un atome d'hydrogène ou un radical alkyle linéaire ou ramifié en $C_1$-$C_8$ inclusivement,
- p est un nombre entier compris entre 1 et 50 inclusivement, de préference entre 1 et 16 inclusivement,
- q est un nombre entier compris entre 0 et 30 inclusivement, de préference entre 0 et 8,
- r est un nombre entier compris entre 0 et 500 inclusivement, de préference entre 2 et 50 inclusivement.

Bien entendu quand les polymères de formule (1) se présentent sous forme de mélange ayant les mêmes motifs mais en nombre différent comme dans certains exemples ci-dessous, ce mélange peut être représenté par une formule (1) moyenne dans laquelle p, q et r peuvent être des nombres decimaux.

Comme exemples de radicaux R et R′ alkyle on peut citer les radicaux méthyle, éthyle, n-propyle, isopropyle, n-butyle et éthyl-2 hexyle.

Comme exemples de motifs diorganosiloxane $R_2SiO$ on peut citer :

$(CH_3)_2SiO$

$(C_6H_5)(CH_3)SiO$

$(CF_3$-$CH_2$-$CH_2)(CH_3)SiO$

Comme exemples de chaînon Y, on peut citer :

$-CH_2-$, $-(CH_2)_2-$, $-(CH_2)_3-(OCH_2-CH_2)_{29}-$, $(CH_2)_3-$,

$-(CH_2)_3-$ $(O-CH_2-CH(CH_3)$ $_{15}-$, $-CH_2-CH(CH_3)-CH_2-$, $-(CH_2)_{12}-$,

Le chaînon $-(CH_2)_3-$ est le chaînon préféré.

Comme exemples de radicaux -OCOCH(R′)SH on peut citer :

- $OCOCH_2SH$

- $OCOCH(CH_3)SH$

- $OCOCH(CH_2CH_3)SH$

Essentiellement pour des raisons d'accessibilité de matières premières, R′ est de préférence H ou méthyle.

Les polymères de formule (1) peuvent être des copolymères à bloc ou séquencés, selon la nature des copolymères de départ utilisés pour la synthèse des copolymères de formule (1).

La présente invention concerne également un procédé de préparation des polymères de formule (1) selon lequel on fait réagir l'alpha-mercaptoacide de formule :

$HOOCCH(R')SH$ (2)

dans laquelle R′ a la même signification qu'à la formule (1), sur une diorganopolysiloxane de formule :

$$R_3Si - \left[ OSiR_2 \right]_r - \left[ OSiR(YOH) \right]_{p+q} - OSiR_3 \qquad (3)$$

dans laquelle R, Y, r, p et q ont la même signification qu'à la formule (1), en vue d'obtenir le polymère de formule (1) et de l'eau de condensation qui est éliminée.

La réaction peut s'effectuer en masse ou, de préférence en milieu solvant organique tel que le xylène et le toluène.

La réaction de condensation est accélérée par l'ajout d'un catalyseur acide, par exemple un acide sulfonique tel que l'acide p-toluène sulfonique.

L'eau formée peut être éliminée en portant le mélange réactionnel au reflux et en distillant azéotropiquement l'eau.

Dans le cas où l'on veut obtenir un polymère de formule (1) dans laquelle q = 0 on utilise soit une quantité sensiblement stoechiométrique d'alpha-mercaptoacide de formule (2) soit, de préférence un excès molaire de cet acide qui est éliminé en fin de réaction par décantation après neutralisation par une solution aqueuse basique (par exemple une solution d'acétate de sodium) .

Dans le cas où l'on veut obtenir un polymère de formule (1) où q est différent de 0, on utilise une quantité adaptée inférieure à la quantité stoechiométrique d'alpha-mercaptoacide de formule (2) en fonction des nombres p et q préalablement choisis.

Pour préparer les produits de départ de formule (3) dans le cas où ces produits sont nouveaux ou non disponibles dans le commerce, on peut en particulier faire réagir sur un hydrogénoorganopolysiloxane de formule :

$$R_3Si - \left[ OSiR_2 \right]_r - \left[ OSi(R)H \right]_{p+q} - OSiR_3 \qquad (4)$$

dans laquelle R, r, p, q ont la signification donnée à la formule (1) sur un alcool à insaturation alcénique de formule WOH dans laquelle W est un radical linéaire ou ramifié ayant de 2 à 18 atomes de carbone. Parmi ces alcools on utilise plus particulièrement l'alcool allylique et méthallylique en utilisant un catalyseur d'hydrosilylation au platine conformément à l'enseignement des brevets américains US-A-2 970 150 et US-A-4 160 775.

Les produits de formule (4) sont des produits bien connus dans l'industrie des silicones et sont généralement disponibles dans le commerce où sont aisément préparables par des méthodes faisant l'objet de publications très nombreuses. Beaucoup de polymères de formule (4) sont par exemple décrits dans les brevets américains US-A-3 220 942, US-A-3 341 111 et US-A-3 436 366.

Une utilisation plus particulèrement avantageuse des polymères ou produits de formule (1) est leur utilisation dans un procédé de stabilisation des polymères halogénés, et notamment des polymères à base de chlorure de vinyle, caractérisé par l'emploi conjoint :

a) - d'une quantité efficace d'au moins un dérivé organique du zinc,

b) - d'une quantité efficace d'au moins un dérivé organique d'un métal du groupe $II_a$ de la classification périodique des éléments ou d'au moins une hydrotalcite,

c) - d'une quantité efficace d'au moins un produit de formule (1).

Par dérivé organique du zinc de même que par dérivé organique d'un métal du groupe $II_a$, on entend :

- des sels dont l'anion provient principalement d'acides monocarboxyliques ou dicarboxyliques aliphatiques ayant de 2 à 24 atomes de carbone, saturés ou non, ou de monoesters, d'alkyle ayant 1 à 24 atomes de carbone ou d'alkényle ayant 3 à 24 atomes de carbone, des acides dicarboxyliques aliphatiques précédents, substitués ou non, ou d'acides monocarboxyliques aromatiques ou alicycliques substitués ou non ; parmi les anions les plus couramment utilisés, on peut citer ceux qui dérivent des acides maléique, acétique, propionique, hexanoïque, éthyl-2 hexanoïque, octanoïque, décanoïque, undécanoïque, laurique, myristique, palmitique, stéarique, oléique, ricinoléique, béhénique, hydroxystéarique, hydroxyundécanoïque, benzoïque, phénylacétique, alkylbenzoïque, paratertiobutylbenzoïque, salicylique ;
- des dérivés métalliques (phénolates) de composés phénoliques substitués ou non, tels que le phénol ou les phénols substitués par un radical alkyle ayant de préférence de 4 à 24 atomes de carbone ;
- des mercaptides par exemple le zinciosulfuro-2 acétate d'isooctyle ;
- des chélates de composés béta-dicarbonylés.

Pour des raisons pratiques ou pour des raisons économiques, on choisit de préférence, parmi les dérivés métalliques cités précédemment, ceux qui dérivent des acides carboxyliques ou des composés phénoliques.

Les hydrotalcites également utilisées comme composé b) dans le procédé selon l'invention sont des composés ayant la formule générale :

$Mg_{(1-a)}A1_a(OH)_2A_{a/2}, pH_2O$ (4)

dans laquelle :
- a est un nombre de 0 à 0,5 ;
- A représente $SO_4^-$ ou $CO_3^-$ ;
- p représente le nombre de molécules d'eau par molécule d'hydrotalcite.

Ces hydrotalcites comprennent les hydrotalcites naturelles et les hydrotalcites obtenues par traitement des hydrotalcites naturelles.

Ce sont en particulier les hydrotalcites décrites dans le brevet FR-A-2 483 934.

Ainsi on utilise fréquemment comme composé a) les sels de zinc des acides propionique, octanoïque, laurique, stéarique, oléique, ricinoléique, benzoïque, paratertiobutylbenzoïque, salicylique ou du maléate de monoéthyl-2 hexyle et les nonylphénates de zinc ; comme composé b) on utilise fréquemment les sels de calcium, de magnésium, de baryum ou de strontium des acides propionique, octanoïque, laurique, stéarique, oléique, ricinoléique, benzoïque, paratertiobutylbenzoïque, salicylique et du maléate de monoéthyl-2 hexyle et les nonylphénates de calcium, de magnésium, de baryum ou de strontium ; comme compose b) on utilise également les hydrotalcites et plus préférentiellement les hydrotalcites commerciales obtenues par traitement des hydrotalcites naturelles.

Parmi les dérivés mentionnés en b), on préférera pour les applications alimentaires les dérivés du calcium et les dérivés du magnésium, et les hydrotalcites et encore plus particulièrement les dérivés du calcium et les hydrotalcites qui conduisent à de très bons résultats.

Les composés b) sont aussi couramment utilisés en mélanges tels que sels organiques de Ca et Ba, sels organiques de Ca et Mg, hydrotalcite et sel organique de Ca, hydrotalcite et sel organique de Ba ou hydrotalcite et sel organique de Mg.

Des taux de 0,005 à 5 % en poids de composés b) par rapport au polymère à stabiliser et de préférnce de 0,02 à 2 % permettent, en addition avec les autres stabilisants revendiqués, l'obtention de bons résultats.

Des taux de 0,005 à 1 % en poids de composé a) par rapport au polymère à stabiliser et de préférence de 0,01 à 0,6 % conduisent à de très bons résultats.

Les produits de formule (1) sont utilisés dans des proportions relatives au polymère qui varient très largement selon leur teneur en fonction mercapto-ester ; ces proportions sont généralement comprises entre 0,005 % en poids et 5 % en poids par rapport au polymère. De préférence on utilisera de 0,05 % en poids à 2 % en poids de produits de formule (1) par rapport au polymère.

D'une manière générale on peut indiquer que la proportion pondérale de chacun des constituants des compositions selon l'invention sera d'autant plus élevée dans les compositions polymériques à stabiliser que celles-ci seront plus rigides, c'est-à-dire contiendront moins de plastifiant.

Dans l'intervalle des différentes proportions données pour chacun des constituants a), b) et c) par rapport au polymère, il est bien entendu que l'homme de métier pourra être amené à adapter les rapports relatifs de ces différents constituants, afin d'obtenir telle ou telle formulation plus particulièrement destinée à fournir le résultat désiré, ou en fonction de l'origine ou du mode de préparation du polymère.

Ainsi par exemple les polymères préparés en suspension pourront en général contenir une proportion de zinc plus élevée que les polymères préparés en masse, mais ces proportions restent néanmoins préférentiellement comprises dans les valeurs indiquées précédemment. Conjointement aux dérivés organiques du zinc, aux dérives organiques des métaux du groupe $II_a$ de la classification périodique et/ou aux hydrotalcites et aux produits de formule (1), il peut être intéressant d'utiliser un polyol dans la mise en oeuvre du procédé selon l'invention, bien qu'un tel composé ne présente pas de caractère d'indispensabilité. Sa présence est particulièrement intéressante pour staliliser des polymères à base de chlorure de vinyle préparés en masse.

Les polyols conviennent généralement pour allonger l'effet stabilisant des composés métalliques ou organiques utilisés dans le procédé selon l'invention. Un compromis doit toutefois être trouvé car ces produits

ont tendance à colorer les compositions. Pour des problèmes de mise en oeuvre à température élevée des polymères à base de chlorure de vinyle, il est préférable que les polyols utilisés dans le procédé de stabilisation selon l'invention aient un point d'ébullition supérieur à 150 °C et le plus souvent supérieur à 170 °C.

A titre d'exemples de tels polyols on peut citer des triols comme le triméthylolpropane, le glycérol, l'hexane triol-1,2,6, le butane triol-1,2,4 et le trishydroxyéthylisocyanurate, des tétrols comme le pentaérythritol, le diglycérol, des pentitols comme le xylitol, des hexitols comme le sorbitol, le mannitol et le dipentaérythritol, des polyols à huit groupes hydroxyle comme le tripentaérythritol et des polymères à groupes hydroxyle libres comme les alcools polyvinyliques, notamment ceux dans lesquels il reste moins de 30 % en moles de groupes esters par rapport à l'ensemble des groupes hydroxyle et esters et qui présentent une viscosité à 25 °C en solution aqueuse à 4 % en poids comprise entre environ 4 mPa.s et 60 mPa.s.

En général on utilise de 0,005 % à 1 % en poids de polyol par rapport au polymère à stabiliser et de préférence de 0,01 % à 0,6 %.

Il a été trouvé que les polyols ayant plus de quatre groupes hydroxyle dans leur molécule donnent des résultats particulièrement satisfaisants.

Ainsi des polyols comme le sorbitol, le mannitol et le xylitol sont particulièrement efficaces dans le procédé selon l'invention et cela, même utilisés à de faibles doses. Ainsi, bien que ces composés soient employés à des doses situées de préférence entre 0,01 % et 0,25 % en poids, par rapport au polymère, un effet d'amélioration de la stabilisation des compositions polymériques les contenant est déjà net, et on n'observe pas d'effet parasite de coloration, à des teneurs aussi faibles que 0,05 % à 0,01 % en poids par rapport au polymère.

A titre de moyen pour la mise en oeuvre du procédé selon l'invention, un autre objet de l'invention consiste dans le mélange d'au moins un dérivé organique du zinc, d'au moins un dérivé organique d'un métal du groupe $II_a$ de la classification périodique des éléments ou d'au moins une hydrotalcite et d'au moins un produit de formule (1).

De tels mélanges peuvent être préparés en toutes proportions ; en général les proportions en poids des différents constituants sont telles que l'on ait :

- de 5 à 40 % de dérivé organique du zinc,
- de 5 à 90 % de dérivé organique d'un metal du groupe $II_a$ de la classification périodique des éléments ou d'hydrotalcite ;
- de 5 à 90 % de produits de formule (1).

Enfin l'invention consiste aussi dans les compositions à base de chlorure de polyvinyle stabilisées, obtenues par l'application du procédé selon l'invention.

Par composition à base de chlorure de polyvinyle, on entend des compositions contenant un homopolymère du chlorure de vinyle, un copolymère de chlorure de vinyle avec divers autres monomères ou un mélange de polymères ou copolymères dont une partie majoritaire est obtenue à partir de chlorure de vinyle.

En général tout type d'homopolymère de chlorure de vinyle peut convenir quel que soit son mode de préparation : polymérisation en masse, en suspension, en dispersion ou de tout autre type et quelle que soit sa viscosité intrinsèque.

Les homopolymères de chlorure de vinyle peuvent être modifiés chimiquement comme par exemple les polymères de chlorure de vinyle chlorés.

De nombreux copolymères de chlorure de vinyle peuvent également être stabilisés contre les effets de la chaleur : jaunissement et dégradation. Ils comprennent des copolymères obtenus par copolymérisation du chlorure de vinyle avec d'autres monomères présentant une liaison éthylénique polymérisable, comme par exemple les esters vinyliques : acétate de vinyle, chlorure de vinylidène ; les acides (ou leurs esters) maléique ou fumarique ; les oléfines : éthylène - propylène - hexène ; les esters acryliques ; le styrène ; ou les esters vinyliques : n-vinyldodécyléther.

Ces copolymères contiennent habituellement au moins 50 % en poids de motifs chlorure de vinyle. Toutefois l'invention s'applique particulièrement bien aux copolymères contenant au moins 80 % en poids de motifs chlorure de vinyle.

L'invention s'applique bien aussi aux mélanges de polymères comprenant des quantités minoritaires d'autres polymères comme les polyoléfines halogénées ou les copolymères acrylonitrile - butadiène - styrène ou aux mélanges d'homopolymères ou de copolymères tels que définis plus haut.

Ces compositions peuvent être soit "rigides" soit "flexibles". Lorsqu'on utilise des compositions "rigides" elles peuvent comporter alors des modificateurs de résistance au choc, des pigments et/ou des charges, des lubrifiants, aidant à leur mise en oeuvre, en plus du polymère et des divers stabilisants ou adjuvants.

Lorsqu'on utilise des compositions "flexibles", elles peuvent comprendre des plastifiants primaires ou secondaires, des pigments et/ou des charges, des lubrifiants, etc ..... en plus du polymère et des divers stabilisants ou adjuvants. Ces stabilisants sont essentiellement des antioxydants, des stabilisants "lumière" ou anti-UV ainsi que d'autres composés connus pour leur effet sur la stabilisation thermique comme par exemple les époxydes, les phosphites, les composés phénoliques.

Ces époxydes sont généralement des composés complexes, habituellement des polyglycérides époxydés comme l'huile de soja époxydée, les huiles de lin ou de poisson époxydées, la talloil époxydée, ou des esters époxydés d'acides gras, ou des hydrocarbures époxydés comme le polybutadiène époxydé, ou des éthers époxydés.

Divers phosphites d'alkyle ou d'aryle sont aussi connus pour leur activité stabilisante comme par exemple le phosphite de phényle et d'éthyl-2 hexyle, le phosphite de triisodécyle ou le diphosphite de diisooctyle et de pentaérythryle.

Des composés phénoliques ont aussi été utilisés comme stabilisants thermiques : il s'agit principalement de l'hydroxytoluène butylé (BHT) et d'autres phénols substitués.

Il va de soi que l'on ne sort pas de l'invention en ajoutant aux stabilisants revendiqués de petites quantités de stabilisants additionnels maintenant bien connus de l'homme de l'art, comme par exemple des beta-dicétones, des composés organiques béta-aminocrotonique ou les dérivés de l'alpha-phénylindole ou les dérivés des dihydropyridines substituées ou d'autres composés soufrés tels que les diesters de l'acide thiomalique.

Les produits de formule (1) peuvent être introduits dans le polymère ou en totalité ou en partie, dans le monomère ou les comonomères à un stade quelconque de la polymérisation.

Les trois stabilisants utilisés dans le procédé selon l'invention peuvent être incorporés en même temps que les autres adjuvants. Ils peuvent aussi être mélangés entre eux ou avec certains des ajuvants. La composition stabilisante sera alors ultérieurement incorporée au polymère à l'état de poudre. Toutes les méthodes usuelles connues dans ce domaine peuvent convenir pour réaliser le mélange des ingrédients.

L'homogénéisation peut être par exemple effectuée à température ambiante dans un mélangeur lent ou être conduite en mélangeur rapide en chauffant le mélange à une temperature comprise entre la température ambiante et 120 °C. Généralement dans cette dernière variante les adjuvants solides et le polymère en poudre sont introduits dans le mélangeur rapide à température ambiante, tandis que les adjuvants liquides sont rajoutés à une température de 40 à 60 °C.

L'agitation est maintenue jusqu'à homogénéisation complète. Généralement des durées de 3 à 20 minutes sont suffisantes, mais ces durées ne sont données qu'à titre indicatif.

Les compositions stabilisées à base de chlorure de polyvinyle selon l'invention peuvent être mises en oeuvre selon toutes les techniques habituellement utilisées pour travailler les compositions de PVC et de ses copolymères par exemple : injection ; extrusion ; extrusion soufflage ; calandrage ; moulage par rotation.

Le procédé de stabilisation selon l'invention permet de retarder considérablement, sinon de supprimer, l'apparition du jaunissement pendant la période où la composition à base de chlorure de polyvinyle mise en oeuvre est chauffée à 180 °C et plus, et d'obtenir des produits finis transparents, incolores, homogènes et ne présentant pas d'exsudation.

Les produits de formule (1) de l'invention outre leur action stabilisante particulièrement efficace confèrent aux polymères à base de chlorure de vinyle, des propriétés de surface telles que lubrification externe, action "processing-aid", antiadhérence, démoulage, hydrofugation, aspect de surface, non adhérence des poussières, résistance à l'abrasion, "antifogging" et hémocompatibilité et sont remarquablement compatibles avec le PVC.

- EXEMPLE 1 :

Dans un ballon tricol de 6 litres muni d'une agitation centrale, d'une ampoule de coulée, d'un réfrigérant ascendant, d'une gaine thermométrique et chauffé par un bain thermorégulé, on charge :

- 2 000 g d'une huile gamma-hydroxypropylée de formule (3) ci-dessus dans laquelle $R = CH_3$, $Y = -(CH_2)_3-$, $p + q$ est environ 9 et r est environ 8,5, titrant 485 meq/100 g en fonction alcool, ce qui représent 9,7 équivalent OH,
- 1 117 g d'acide alpha-mercaptoacétique (formule (2) avec $R' = H$ fraîchement distillé représentant 12,14 équivalent acide, soit environ un excès molaire de 25 % par rapport aux fonctions alcool,
- 2 000 ml de toluène,
- 15,6 g d'acide p-toluène sulfonique.

On porte le mélange trois heures au reflux, on distille azéotropiquement 180 ml d'eau formée par réaction d'estérification, et on stoppe la réaction par neutralisation de l'excès d'acide alpha-mercaptoacétique par une solution aqueuse concentrée de 440 g d'acétate de sodium dans 800 ml d'eau.

On maintient alors le milieu réactionnel pendant 30 minutes sous agitation, on laisse décanter la couche aqueuse que l'on élimine par décantation et on élimine le toluène de la phase organique par distillation à pression atmosphérique puis sous une pression réduite de 1,6 KPa. On obtient ainsi une huile légèrement trouble et colorée que l'on traite pendant 90 minutes sur 40 g de noir de carbone et que l'on filtre sous azote sur un filtre en Téflon$^R$ de diamètre moyen de pores 0,45 micromètre. On obtient ainsi 2 693 g d'une huile limpide et incolore.

Les analyses effectuées sur cette huile montrent l'absence de groupes acide carboxylique (-COOH) par acidimétrie. Les spectres IR et RMN montrent une structure de l'huile en accord avec la structure prévue.

La fonction mercaptan est dosée comme fonction acide faible par acidimétrie en milieu hydroalcoolique. Le titre en fonction SH obtenu est de 330 meq/100 g. On obtient ainsi 8,9 g équivalent de fonction SH pour les 9,7 équivalent de fonction gamma-hydroxyalkyle engagés ce qui donne un rendement de 91,6 %.la formule moyenne de l'huile obtenue est approximativement :

$$_3(CH_3)Si-\left[OSi(CH_3)-\left[(CH_2)_3-OCOCH_2SH\right]\right]_9-\left[OSi(CH_3)_2\right]_{8,5}-OSi(CH_3)_3$$

- <u>EXEMPLE 2</u> :

On opère comme à l'exemple 1 sauf que l'on fait réagir un défaut d'acide alpha-mercaptoacétique.

On charge dans le ballon tricol de 6 litres :

- 2 000 g de l'huile gamma-hydroxypropylée à 485 meq/100 g,
- 580 g (6,3 moles) d'acide alpha-mercaptoacétique,
- 2 000 ml de toluène,
- 5 g d'acide p-toluène sulfonique.

On porte pendant 90 minutes le mélange réactionnel au reflux, on distille azéotropiquement 115 ml d'eau formée (quantité d'eau théorique 113,4 ml) et on arrête alors la réaction.

Après purification de l'huile obtenue selon le mode opératoire de l'exemple 1, on obtient 2446 g d'huile titrant par acidimétrie 236 meq/100 g de fonction SH.

Les différentes analyses et les spectres RMN et IR correspondent pour l'huile obtenue la formule moyenne attendue :

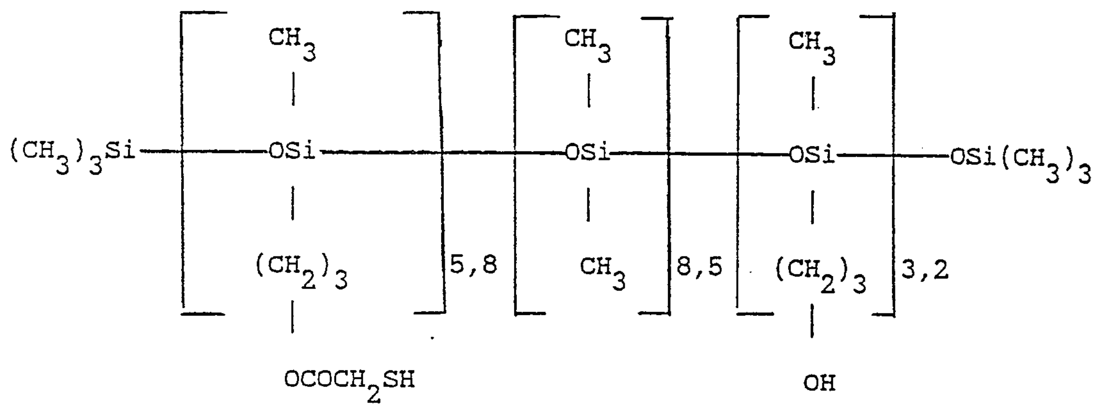

et titrant 123 meq/100 g en SH déterminé par acidimétrie.

- <u>EXEMPLE 3</u> :

On opère selon le mode opératoire de l'exemple 1 et l'on charge dans le ballon tricol :

- 200 g d'une huile gamma-hydroxypropylée titrant 352 meq/100 g en fonction alcool de formule moyenne :

$$(CH_3)_3\,Si-\left[OSi(CH_3)_2\right]_{13}-\left[O\,Si\,(CH_3)(CH_2)_3-OH\right]_{2,5}-OSi\,(CH_3)_3$$

- 32,4 g d'acide alpha-mercapto acétique représentant 352 meq de fonction acide,
- 300 ml de toluène,
- 1 g d'acide p-toluène sulfonique.

On porte le mélange réactionnel au reflux pendant une heure en distillant azéotropiquement 5,1 ml d'eau formée (théorie : 6,34 ml).

Après purification on obtient 212 g d'huile limpide et incolore, dont les analyses chimiques et spectrales

sont en accord avec une huile de formule moyenne :

$$(CH_3)_3Si-\left[OSi(CH_3)-\left[(CH_2)_3-OCOCH_2SH\right]\right]_2\left[OSi(CH_3)-\left[(CH_2)_3-OH\right]\right]_{0,5}\left[OSi(CH_3)_2\right]_{13}-OSi(CH_3)_3$$

et titrant 123 meq/100 g en SH déterminé par acidimétrie.

EXEMPLE 4 :

On opère selon le mode opératoire de l'exemple 1 et l'on charge dans le ballon tricol :
- 500 g de l'huile gamma-hydroxypropylée utilisée à l'exemple 1,
- 261 g d'acide alpha-mercapto-2 propionique (pureté 98,5 %) de formule HS-CH(CH$_3$)COOH représentant 2 452 meq de fonction acide,
- 1 000 ml de toluène,
- 3 g d'acide p-toluène sulfonique.

Après avoir porté le mélange réactionnel 5 heures au reflux, on recueille 35 ml d'eau (pour 43,7 ml théorique) et on stoppe la réaction. On constate donc que la réaction d'estérification est plus lente qu'aux exemples 1 à 3.

Après purification on obtient 666 g d'une huile limpide et incolore dont les analyses chimiques et spectrales (RMN, IR) sont en accord avec une huile de formule moyenne :

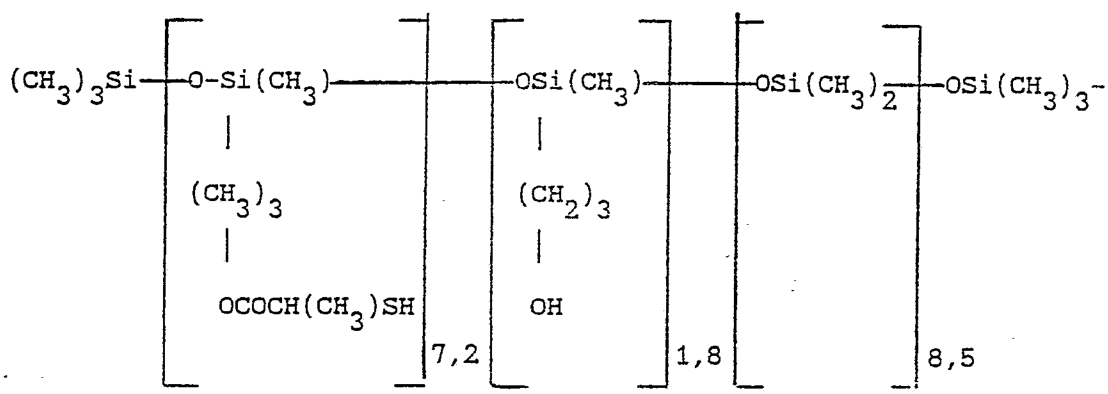

- EXEMPLES 5 A 20 (PVC plastifié) :

On prépare la composition homogène A de base suivante :
- 2 000 g de pvc en poudre, caractérisé par un indice de viscosité de 120 selon la norme NF T 51 013 obtenu par polymérisation en émulsion et commercialisé sous la marque SOLVIC[R] 271 GB,
- 1 000 g de phtalate de dioctyle,
- 30 g d'huile de soja époxydée,
- 10 g de p-tertiobutylbenzoate de baryum,
- 2 g d'éthyl-2 hexanoate de zinc,
- 4 g de cire de polyéthylène oxydé commercialisée sous la dénomination CIME[R] AC 629-A.

On prélève 16 fractions de 152 g chacune (chaque fraction comportant 100 g de PVC). A chaque fraction on ajoute une certaine quantité de l'huile obtenue aux exemples 1 à 4. A titre comparatif, la fraction 1 de l'exemple comparatif 5 ne comporte pas d'additif et les fractions 2, 3 et 4 des exemples comparatifs 6, 7 et 8 comporte, à la place de ces huiles, le diester mercapto-2 propionique du néopentylglycol, dénommé par la suite ENPG de formule :

$HSCH(CH_3)OCO-CH_2\ C\ (CH_3)_2\ CH_2 - OCOCH(CH_3)SH$

On prépare à l'aide des différentes compositions obtenues, ainsi qu'avec la composition A non modifiée, des feuilles de 1 mm d'épaisseur par malaxage sur un mélangeur à deux cylindres pendant trois minutes à 180 °C. On découpe dans ces feuilles des échantillons rectangulaires de 1 × 2 cm environ.

On effectue le test de vieillissement thermique sur ces échantillons, en étuve à 180 °C, pendant des durées variables (t en minutes).

On détermine alors la coloration des échantillons par comparaison avec un disque LOVIBOND selon l'échelle GARDNER..

Les résultats sont rassemblés dans le tableau 1 ci-après dans lequel :

- Q : quantité en g pour 100 g de PVC de stabilisant ajoutée
- t : temps en minutes
- X : temps en minutes au bout duquel on obtient une coloration noire
- * : bords noirs sur l'échantillon.

Du tableau 1 ci-après il apparaît que les huiles selon l'invention ont un pouvoir stabilisant du PVC au moins équivalent à celui de l'ENPG.

TABLEAU 1

| Ex. | STABILISANT | COLORATION GARDNER EN FONCTION DU TEMPS A 180 °C | | | | | | | | |
|---|---|---|---|---|---|---|---|---|---|---|
| | | Q \ t | 0 | 7 | 14 | 21 | 30 | 45 | 60 | X |
| 5 | Témoin A | 0 | 0 | 1 | 2 | 3 | 3 | 3 | * | 65 |
| 6 | ENPG | 0,4 | 0 | 0 | 0 | 0 | 0 | 0,5 | 1 | 70 |
| 7 | ENPG | 0,6 | 0 | 0 | 0 | 0 | 0 | 0 | 0,5 | 75 |
| 8 | ENPG | 0,8 | 0 | 0 | 0 | 0 | 0 | 0 | 0 | 85 |
| 9 | Huile de l'exemple 1 | 0,4 | 0 | 0 | 0 | 0 | 0 | 0,5 | 1 | 90 |
| 10 | " " " | 0,6 | 0 | 0 | 0 | 0 | 0 | 0 | 0 | 110 |
| 11 | " " " | 0,8 | 0 | 0 | 0 | 0 | 0 | 0 | 0 | 120 |
| 12 | Huile de l'exemple 2 | 0,4 | 0 | 0 | 0 | 0 | 0,5 | 1 | 2 | 80 |
| 13 | " " " | 0,6 | 0 | 0 | 0 | 0 | 0 | 0,5 | 1 | 95 |
| 14 | " " " | 0,8 | 0 | 0 | 0 | 0 | 0 | 0 | 1 | 110 |
| 15 | Huile de l'exemple 3 | 0,4 | 0 | 0 | 0 | 0 | 1 | 2 | 3 | 65 |
| 16 | " " " | 0,6 | 0 | 0 | 0 | 0 | 0 | 1 | 2,5 | 80 |
| 17 | " " " | 0,8 | 0 | 0 | 0 | 0 | 0 | 0 | 2 | 85 |
| 18 | Huile de l'exemple 4 | 0,4 | 0 | 0 | 0 | 0 | 0 | 0,5 | 2 | 95 |
| 19 | " " " | 0,6 | 0 | 0 | 0 | 0 | 0 | 0,5 | 2 | 90 |
| 20 | " " " | 0,8 | 0 | 0 | 0 | 0 | 0 | 0 | 1,5 | 110 |

- EXEMPLES 21 A 25 (PVC rigide) :

On prépare la composition homogène B de base suivante :

- 1 000 g de PVC en poudre, caractérisé par un indice de viscosité de 80 selon la norme NF T 51 013, obtenu par polymérisation en suspension et commercialisé sous la dénomination LACQVYL® SO 71 S,
- 80 g d'un agent renforçateur de choc (copolymère butadiène-styrène-méthacrylate de méthyle),
- 20 g de cire de polyéthylène oxydé,
- 40 g d'huile de soja époxydée,
- 2,5 g de stéarate de calcium,
- 2,5 g de stéarate de zinc.

On prépare 5 fractions de 114,5 g chacune (chaque fraction comportant 100 g de PVC). La première fraction ne comporte pas d'additif (exemple comparatif 21), les fractions 2 et 3 comportent comme additif de l'ENPG (exemples comparatifs 22 et 23). Les fractions 4 et 5 comportent de l'huile de l'exemple 1.

On suit le même mode opératoire qu'aux exemples 5 et 20. Les résultats obtenus sont rassemblés dans le tableau 2 ci-après dans lequel on utilisé les mêmes abréviations que dans le tableau 1. Du tableau 2, il apparaît que les huiles selon l'invention ont un pouvoir stabilisant du PVC très net au moins équivalent à celui apporté par l'ENPG.

TABLEAU 2

| Ex. | STABILISANT | COLORATION GARDNER EN FONCTION DU TEMPS A 180 °C | | | | | | | | |
|---|---|---|---|---|---|---|---|---|---|---|
| | | Q \ t | 0 | 7 | 14 | 21 | 30 | 45 | 60 | X |
| 21 | Témoin B | 0 | 3 | 6 | 7 | 8 | 8 | 10 | 11 | 65 |
| 22 | ENPG | 0,4 | 0 | 0 | 4 | 7 | 10 | 10 | 10 | 70 |
| 23 | ENPG | 0,8 | 0 | 0 | 0,5 | 3 | 6 | 7 | 10 | 70 |
| 24 | Huile de l'exemple 1 | 0,4 | 0 | 0 | 4 | 6 | 10 | 10 | 10 | 70 |
| 25 | " " " | 0,8 | 0 | 0 | 0 | 3 | 5 | 7 | 10 | 75 |

**Revendications**

1. - Diorganopolysiloxane de formule :

$$R^3Si - \left[ OSi(R) \left[ YOCOCH(R')SH \right] \right]_p \left[ OSiR_2 \right]_r \left[ OSi(R)(YOH) \right]_q - OSiR_3 \qquad (1)$$

dans laquelle :

- les symboles R identiques ou différents sont choisis parmi les radicaux alkyle linéaires ou ramifiés en $C_1$-$C_8$ inclusivement, phényle et trifluoro-3,3,3 propyle au moins 80 %, les radicaux R étant des radicaux méthyle,

- les symboles Y, identiques ou différents représentent un chaînon choisi parmi un chaînon alkylène linéaire ou ramifié en $C_1$-$C_{18}$ inclusivement, éventuellement prolongé par un chaînon polyéther choisi parmi le polyoxyde d'éthylène, le polyoxyde de propylène et leurs mélanges,
- le symbole R′ représente un atome d'hydrogène ou un radical alkyle linéaire ou ramifié en $C_1$-$C_8$ inclusivement,
- p est un nombre entier compris entre 1 et 50 inclusivement, de préférence entre 1 et 16 inclusivement,
- q est un nombre entier compris entre 0 et 30 inclusivement, de préférence entre 0 et 8,
- r est un nombre entier compris entre 0 et 500 inclusivement, de préférence entre 2 et 50 inclusivement.

2. - Diorganopolysiloxane selon la revendication 1, caractérisé en ce que R est méthyle, R′ est H ou méthyle et Y est le chaînon $-(CH_2)_3-$.

3. - Procédé de préparation d'un diorganopolysiloxane tel que défini aux revendications 1 ou 2, caractérisé en ce qu'on fait réagir l'alpha-mercaptoacide de formule :

HOOCCH(R′)SH (2)

dans laquelle R′ a la même signification qu'à la formule (1), sur une diorganopolysiloxane de formule :

$$R_3Si-\left[OSiR_2\right]_r-\left[OSiR(YOH)\right]_{p+q}-OSiR_3 \qquad (3)$$

dans laquelle R, Y, r, p et q ont la même signification qu'à la formule (1), en vue d'obtenir le polymère de formule (1) et de l'eau de condensation qui est éliminée.

4. - Procédé selon la revendication 3, caractérisé en ce que la réaction (3) est effectuée en présence d'un catalyseur acide.

5. - Procédé selon la revendication 4, caractérisé en ce que le catalyseur est l'acide p-toluène sulfonique.

6. - Procédé de stabilisation des polymères à base de chlorure de vinyle, caractérisé par l'emploi conjoint :

a) - d'une quantité efficace d'au moins un dérivé organique du zinc,

b) - d'une quantité efficace d'au moins un dérivé organique d'un métal du groupe $II_a$ de la classification périodique des éléments ou d'au moins une hydrotalcite,

c) - d'une quantité efficace d'au moins un produit de formule (1) tel que défini à l'une quelconque des revendications 1 à 2.

7. - Procédé selon la revendication 6, caractérisé en ce qu'on utilise en poids par rapport au polymère à stabiliser :
- de 0,005 à 1 %, de préférence de 0,01 à 0,6 % de composé a),
- de 0,005 à 5 %, de préférence de 0,02 à 2 % de composé b),
- de 0,005 à 5 %, de préférence de 0,05 à 2 % de composé c).

8. - Composition pour la mise en oeuvre d'un procédé tel que défini à la revendication 6 ou 7, caractérisé en ce qu'elle comprend en poids :
- de 5 à 40 % de composé a),
- de 5 à 90 % de composé b),
- de 5 à 90 % de composé c).

9. - Composition de polymère à base de chlorure de vinyle stabilisée par le procédé de la revendication 6 ou 7.

10. - Objets conformés obtenus à partir des polymères stabilisés par le procédé de la revendication 6 ou 7.

Office européen des brevets

# RAPPORT DE RECHERCHE EUROPEENNE

Numero de la demande

EP 88 42 0053

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 558 147 (R.P. ECKBERG)<br>* Revendication 1 * | 1 | C 08 G 77/38<br>C 08 L 27/06 |
| A | EP-A-0 013 402 (BAYER)<br>* Revendication 1; page 7, paragraphe 1 * | 1 | |
| | | | **DOMAINES TECHNIQUES RECHERCHES (Int. Cl.4)** |
| | | | C 08 G<br>C 08 L |

Le présent rapport a été établi pour toutes les revendications

| Lieu de la recherche | Date d'achèvement de la recherche | Examinateur |
|---|---|---|
| LA HAYE | 12-07-1988 | DEPIJPER R.D.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)